# EUROPÄISCHE PATENTSCHRIFT

(11) **EP 2 410 225 B1**
(45) Veröffentlichungstag und Bekanntmachung des Hinweises auf die Patenterteilung: **28.10.2015**
(21) Anmeldenummer: 11004708.1
(22) Anmeldetag: 09.06.2011
(51) Int. Cl.: F16L 13/02, F16L 58/18, F16L 49/02

(54) **Zementrohrmanschette zur korrosionshemmenden Abdeckung**
Cement pipe sleeve for anti-corrosive covering
Manchette de tuyau en ciment pour le recouvrement anti-corrosion

(30) Priorität: 22.07.2010 DE 102010031951
(43) Veröffentlichungstag der Anmeldung: 25.01.2012
(73) Patentinhaber: Schreck, Paul, 97892 Kreuzwertheim (DE)
(72) Erfinder: Schreck, Paul, 97892 Kreuzwertheim (DE)
(74) Vertreter: Pöhner, Wilfried Anton

(56) Entgegenhaltungen:
- EP-A1- 0 005 814
- US-A- 1 959 421
- US-A- 5 009 737
- US-B1- 6 440 245

## Beschreibung

Die Erfindung bezieht sich auf eine Zementrohrmanschette zur Korrosionshemmenden Abdeckung der Verbindung von aneinandergrenzenden Rohrstutzen, bestehend aus einem vor dem Erhärten flexiblen, Mörtelring und einem darauf flächig aufliegenden und zu einem Ring verbundenen Tragstreifen, der zahlreiche Öffnungen aufweist.

Auf aktuellem Stand der Technik sind Rohre, sowie Hohlkörper, die Rohrstutzen aufweisen, weithin bekannt. Problematisch ist dabei jedoch stets die Verbindung eines Rohrstutzens oder eines Rohres mit dem sich daran anschließenden, nächsten Abschnitt eines Rohres oder einem zweitem Rohrstutzen. Zwar sind etliche Verfahren und Vorrichtungen bekannt, um im Prinzip endlose Rohre herzustellen, aber diese Vorrichtungen sind jedoch derart groß und gewichtig, dass es nicht üblich ist, ein Rohr - z.B. für eine Wasserleitung oder für eine Pipeline - direkt am Ort seiner Verlegung in der benötigten Gesamtlänge herzustellen.

Vielmehr entspricht es dem aktuellen Stand der Verlegetechnik, dass die Rohre abschnittsweise produziert werden, in diesen Abschnitten zum Verlegeort transportiert und dort wieder mit anderen Rohren oder mit einem Rohrstutzen verbunden werden.

Für Pipelines zum Transport von Öl oder für Wasserrohre zum Weiterleiten von Brauchwasser oder Abwasser sind zum Beispiel Stahlrohre seit Langem bekannt und sehr weit verbreitet. Die Offenlegungsschrift DE 2 134 238 vom 09.07.1971 beschreibt Stahlrohre zum Weiterleiten von Wasser, deren Innenseite mit Zementmörtel beschichtet ist. An der Verbindungsstelle der Stahlrohre ragt stets ein kurzes Stück des Rohres über die innere Mörtelausgleitung hinaus, damit der es problemlos mit dem nächsten, angrenzenden Rohr verschweißt werden kann.

Es ist nicht möglich, die innere Mörtelschicht mit derart hoher Genauigkeit bis an das Rohrende zu führen, dass nach dem Zusammenschweißen der beiden aneinandergrenzenden Rohrenden keine Fuge mehr zwischen den beiden Mörtelschichten wirksam werden würde. Vielmehr saugt jeder - auch ein sehr dünner - Spalt zwischen den beiden Mörtelbereichen des Wasser "kapillar" bis an das Stahlrohr heran, sodass die Verbindung zwischen den beiden Rohren einer verstärkten Korrosion ausgesetzt wäre.

Um das zu vermeiden, schlägt die DE 2 134 238 vor, dass die Mörtelschicht direkt an der Stahlfläche kürzer ist als weiter zum Inneren des Rohres hin, sodass sich zwischen den beiden aneinandergrenzenden Mörtelschichten eine umlaufende Fuge mit trapezförmigem Querschnitt ergibt, deren breiterer Teil die Stahlfläche frei lässt und deren schmaler Teil zum Innenraum des Rohres hin offen ist.

Anschließend wird manuell oder durch ein Schleuderverfahren oder durch Auftragen eines Mörtelwulstes beim Zusammenschieben der Rohre Mörtel in diese Fuge hinein gebracht. Diese Verfahren sind relativ aufwendig und sichern trotzdem keine gleichmäßig umlaufende, das Stahlrohr vollständig abdeckende und mit den beiden Stirnkanten der angrenzenden Mörtelschicht in Verbindung stehende Befüllung der Fuge zu.

Ein weiteres Problem ist, dass stets eine relativ breite Fuge verbleibt, durch welche der noch flüssige oder zähflüssige Mörtel wieder hinaustreten kann.

Zwar ist es vom Prinzip her machbar, diese Fuge z.B. mit einem Ring aus Blech abzudecken. Nachteilig ist jedoch dabei, dass der Ring zur Erzeugung einer glatten Innenfläche exakt auf den Durchmesser der Innenfläche der Mörtelbeschichtung abgestimmt sein muss, was eine relativ aufwändige Form bedingt.

Ein weitaus gravierenderer Nachteil ist, dass der Ring während der gesamten Dauer der Abhärtung des Mörtels an der Fuge verbleiben muss und erst danach wieder entfernt werden kann und auch entfernt werden muss, da er die lichte Innenweite des Rohres verkleinert.

Wenn man sich die Mörtelschicht während des Abhärtens als einen flexiblen, "biegeschlaffen" Schlauch vorstellt, der mit der Innenwand des Rohres in Kontakt bleiben muss, so ist ein Lösungsansatz aus der Patenschrift DE 198 22 465 entnehmbar. Diese Patentschrift beschreibt zwei einander gegenüberstehende Stutzen, die durch einen "biegeschlaffen" Schlauch miteinander verbunden sind.

Der erste Rohrstutzen ist in der o.g. Patenschrift das Ende des Einfülltrichters einer von oben zu beladende Waschmaschine und der zweite Rohrstutzen ist auf dem Gehäuse der Waschtrommel verbunden. Da sich der zweite Rohrstutzen am Gehäuse der Waschtrommel durch deren prinzipbedingte Unwucht stets gegenüber dem ersten Rohrstutzen bewegt, muss der Schlauch zur Verbindung der beiden Rohrstutzen dauerhaft flexibel sein.

Die Patentschrift beschreibt, wie diese beiden Rohrstutzen mit einem biegeschlaffen Schlauch verbunden werden. Aus der Patentschrift ist zu entnehmen, dass zur Stabilisierung des "biegeschlaffen Schlauches" ein gitterartiges Stützteil auf den Schlauch aufgedrückt wird, das den Schlauchteil ringartig umschließt. Deshalb ist es kein wesentlicher Unterschied, ob der "biegeschlaffe Schlauch" auf die Außenseite der beiden Rohrstutzen oder auf die Innenseite aufgebracht ist, da er durch das gitterartige Stützteil an die beiden Rohrstutzen angedrückt wird. Ebenfalls unerheblich ist, welches Profil die beiden zu verbindenden Rohrstutzen aufweisen. Die o.g. Patentschrift beschreibt ein etwa rechteckiges Profil, dessen Ecken zu einem Viertelkreis abgerundet sind.

Es ist gedanklich sehr einfach, den "biegeschlaffen Schlauch" der vorgenannten Patentschrift DE 198 22 465 durch die langsam erhärtende Mörtelschicht zu ersetzen, da sie in diesem Zustand sehr ähnliche Eigenschaften aufweist.

Im Gegensatz zu den beiden, im obiger Erfindung genannten Rohrstutzen, die sich dauerhaft gegeneinander bewegen, sind die beiden Rohrstutzen einer Rohrverbindung vor dem Aufbringen einer Korrosionsschutzschicht bereits miteinander fest verbunden, z.B. verschweißt. Aber auch in diesem Fall weist eine gitterförmige Stützeinrichtung den ganz wesentlichen Vorteil auf, dass die Mörtelabdeckung in Form eines "biegeschlaffen Schlauches" weiterhin einer Kontrolle und einer Bearbeitung zugänglich ist. Durch die Öffnungen hindurch bleibt das Material weiterhin sichtbar, sodass es überprüft und gegebenenfalls vervollständigt werden kann. Ebenso ist eine weitere Bearbeitung - wie z.B. ein Verdichten - durch die Öffnungen hindurch möglich.

Die Anwendung der Grundidee dieser Erfindung mit dem Verbinden der beiden Rohrstutzen durch einen biegeschlaffen Mörtelring gibt jedoch keinerlei Hinweis darauf, wie es gelingen soll, den Zement mit vertretbarem Aufwand in die Form eines "flexiblen Mörtelringes" zu bringen und wie dieser flexible Mörtelring auf der Verbindungsstelle von aneinandergrenzenden Rohrstutzen platziert werden kann.

In der Patentschrift US 1,959,421 A ist eine zweilagig aufgebaute Zementrohrmanschette zur korrosionshemmenden Abdeckung der Verbindung von aneinandergrenzenden Rohrstutzen vorgeschlagen, welche im Inneren durch ein Gewebe verstärkt und von beiden Seiten von Mörtel umgeben ist. Die Zementrohrmanschette besteht dabei aus einem vor dem Erhärten flexiblen Mörtelring und einem darauf flächig aufliegenden und zu einem Ring verbundenen Tragstreifen. Der Tragstreifen weist zahlreiche Öffnungen auf, besteht aus wasserfestem Material und ist in tangentialer Richtung mit höheren Kräften belastbar als in anderen Richtungen.

In der Patentschrift US 5,009,737 ist ein Verfahren zur Verbindung von Rohrleitungen beschrieben, sowie eine Vorrichtung zur Durchführung des Verfahrens. Die Rohrleitungen werden dabei an ihrem Ende mit einem Hitze-empfindlichen und durchgehenden Cover bezogen, welches sich zwischen den axialen Enden der Rohrleitungen und den Auskleidung der inneren Wände erstreckt. Auf diese Weise erstreckt sich das Cover über die Enden der Rohrleitungen hinweg.

Die Patentschrift US 6,440,245 B1 offenbart ein Verfahren und eine Vorrichtung zur korrosionsfreien Beschichtung von Schweißnähten und/oder anderen beschädigten Bereichen der Beschichtung unterirdischer Rohrleitungen. Der wieder zu beschichtende Bereich wird zuerst sandgestrahlt und dann erhitzt. Danach wird dieser Abschnitt mit zwei Fluiden (einem Primer und einem Klebstoff) benässt, bevor die neue Ummantelung auf den vorgeheizten Bereich aufgebracht wird. Anschließend wird die neue Ummantelung aufgebacken.

Die vorliegende Erfindung hat sich dieses Problem als Aufgabe gestellt und lehrt als Lösung, dass der Mörtel in trockenem Zustand als ein pulverförmiges Gemisch aus Zement und Zuschlagstoffen in die Hohlräume eine Vliesstreifens eingebracht ist, der auf dem Tragstreifen aufliegt und der durch die Öffnungen des Tragstreifens hindurch bewässerbar ist und der Tragstreifen aus wasserfestem Material besteht und in tangentialer Richtung mit höheren Kräften belastbar ist, als in anderen Richtungen.

Die Grundidee der Erfindung basiert also auf drei wesentlichen Elementen, nämlich
- erstens einem Tragsteifen, der für die mechanische Stabilisierung des Mörtels sowohl in dessen pulverförmigen, als auch in dessen vorübergehend flexiblen Zustand sorgt und
- zweitens der Einbringung des Mörtels als Pulver in die Hohlräume eines Vliesstreifens und
- drittens der Möglichkeit, durch die Öffnungen des Tragstreifens hindurch und durch die Hohlräume zwischen den Fasern des Vlies hindurch den pulverförmigen Mörtel durch die Zugabe von Wasser zu einer flexiblen Masse umzuformen.

Dadurch ergibt sich als entscheidender Fortschritt, dass die Zementrohrmanschette im trockenen und daher noch pulverförmigen Zustand des Mörtels auf die Verbindung der beiden aneinandergrenzenden Rohrstutzen viel einfacher und problemärmer aufgelegt werden kann als bei allen anderen, bisher bekannten Verfahren.

Da das Vlies den pulverförmigen Mörtel daran hindert, weg zu fliegen oder weg zu rieseln, ist das Auflegen ohne die Verschmutzung durch umherwehenden, trockenen oder überquellenden, flüssigen Mörtel möglich.

Vorteilhaft ist auch, dass das mühevolle Hineindrücken der viskosen Mörtelmasse in eine Fuge oder das Aufstreichen einer meistens entweder zu zähen oder zu flüssigen und daher tropfenden Masse auf die Außenfläche des Rohres entfällt. Dank des flexiblen Vlies' lässt sich die erfindungsgemäße Zementrohrmanschette den Abmessungen einer Fuge oder der Kontur einer Außenfläche anpassen.

Eingespart wird auch das Herumlegen einer Form um die Außenseite des Rohres oder das Einlegen einer stützenden Innenschale in das Rohrinnere. Stattdessen ist nur das Krümmen des Tragstreifens und dessen Verbindung zu einem Ring erforderlich, denn der Ring übernimmt durch seine relativ hohe Belastbarkeit gegen Kräfte in tangentialer Richtung die stützende Wirkung einer Form.

Der Tragstreifen übernimmt dabei eine Doppelfunktion, indem er zum einen den pulverförmigen oder flexiblen und viskosen Mörtel an die Rohrfläche drückt und zum anderen die Mörtelschicht im flexiblen, viskosen Zustand daran hindert, ineinander zu verlaufen, also an bestimmten Punkten Verdickungen zu bilden und dafür an anderer Stelle den Querschnitt des Ringes zu schwächen.

Zusätzlich verstärkt der Tragstreifen die Festigkeit des Mörtelringes in seinem erhärteten Zustand. Eine zusätzliche Verstärkung wird - je nach Material des Vlies' - durch die Stränge des Vliesstreifens bewirkt, der den Mörtel wie eine Armierung durchsetzt.

Das Schließen des Tragstreifens zu einem in sich geschlossenen Ring kann durch eine einfache und/oder schnell schließbare Verbindung stark vereinfacht werden, sodass die Anforderungen an die Arbeitszeit und an die Qualifikation einer Person im Vergleich zum manuellen Aufbringen des Mörtels oder im Vergleich zum Anbringen einer Form und deren Ausfüllen mit flüssigem Mörtel dramatisch reduziert ist.

Die erfindungsgemäße Zementrohrmanschette kann also ebenso wie ein passgenau gefertigtes Formteil ohne besondere Verschmutzung der angrenzenden Bereiche verbaut werden, und bietet trotzdem den gleichen Vorteil wie das Ausgießen oder Ausfugen mit einer Form oder einem Formwerkzeug und einer viskosen und flexiblen Mörtelmasse, da sich der flexible Vliesstreifen der genauen Form der Fuge und/oder des Rohrstutzens und/oder kleiner Unregelmäßigkeiten perfekt anpasst.

Dabei ist es von Vorteil, wenn die Öffnungen im Tragstreifen recht klein sind, sodass der Mörtel weder in pulverförmigem noch in flexiblem viskosen Zustand daraus in großer Menge austreten kann. Dann dienen die Öffnungen sowohl zum Zuführen des Wassers beim Hydratisieren des Mörtels als auch zum Abfließen von überschüssigem, zuviel eingespültem Wasser.

Damit der Tragstreifen diese Mehrfachfunktion erfüllen kann, muss er insbesondere in tangentialer Richtung wirkenden Kräften standhalten. Wenn der Mörtel auf der Außenfläche der Rohrstutzen aufgebracht wird, dann muss der Tragstreifen vor allem Zugkräften widerstehen. Wenn der Mörtelstreifen hingegen im Inneren des Rohres angebracht wird, so wird der Tragstreifen vorrangig mit Druckkräften belastet.

Um die Montage zu erleichtern, sollte der Tragstreifen um eine parallel zu seiner kurzen Stirnseite verlaufende Achse mit relativ geringem Kraftaufwand biegbar sein, sodass er dem tatsächlichen Durchmesser des Rohres einfach angepasst werden kann. Um eine ausreichende Stabilität zu gewährleisten, sollte er jedoch um anders ausgerichtete Achsen nur mit relativ sehr hohem Kraftaufwand gebogen werden können. Diese Forderungen werden durch einen länglichen Streifen aus homogenem Material per se erfüllt.

Darüber hinaus ist es in diesem Sinne auch sinnvoll, den Tragstreifen mit Scharnierähnlich wirkenden, sehr schmalen Streifen, die quer zur Längsachse verlaufen und einen deutlich reduzierten Querschnitt aufweisen, zu versehen. Derartige Querschnittsreduzierungen werden auch als "Filmscharniere" bezeichnet.

Eine andere Konfiguration mit ähnlicher Wirkung sind quer zur Längsachse ausgerichtete Rippen. Eine Scharnierähnliche Funktion wird dadurch erreicht, dass der Tragstreifen quer zu seiner Längsachse profiliert ist, was bei Blechstreifen auch als "Wellblech" bezeichnet wird.

Wenn eine erfindungsgemäße Zementrohrmanschette um die Außenseite zweier Rohrstutzen verlegt werden soll, so ist es -wie bereits erwähnt- eine wesentliche Funktion des Tragstreifens, dass er den Mörtel in seinem flexiblen Zustand daran hindern soll, innerhalb des Vliesstreifens zu verfliesen. Dafür ist es vorteilhaft, wenn die beiden Enden des Tragstreifens miteinander verbunden werden können und - idealer Weise - sogar um den Vliesstreifen herum straff gespannt werden können. In dieser Konfiguration ist der Tragstreifen erhöhten Zugkräften ausgesetzt, für die er ausreichend dimensioniert sein sollte.

Ein weiterer Grund dafür, den Tragstreifen gegenüber einer Zugbelastung sehr widerstandsfähig zu gestalten ist die in Zugrichtung begrenzte Belastbarkeit von Mörtel, die bekanntlich geringer als die seine Druckbelastbarkeit ist. Falls sich der Durchmesser des Stahlrohres - z.B. durch Temperatur- oder Druckerhöhungen - geringfügig ändern sollte, so muss auch die Zementrohrmanschette sich entsprechend ändern. Damit sie dabei nicht vom Rohr "abplatzt" ist eine von außen um den Mörtel herum gelegte Verstärkung hilfreich.

Es ist sinnvoll, diese Funktion in den Tragstreifen zu integrieren. Dafür kann er z.B. durch eingelegte Stahldrähte oder Stahlseile verstärkt werden. Diese Verstärkungen sind natürlich nur dann wirksam, wenn sie zu einem Ring geschlossen sind, wobei die Verbindungsstelle ebenso belastbar sein muss wie die übrigen Bereiche der Verstärkung.

Wenn die Zementrohrmanschette auf die Innenseite von Rohrstutzen aufgelegt werden soll, so muss der Tragstreifen besonders Druckkräften widerstehen können. Insbesondere dann, wenn der Trockenmörtel angefeuchtet ist und seine höchste Viskosität erreicht hat, muss sichergestellt werden, dass er innerhalb des Vliesstreifens nicht in dessen Längsrichtung wandert und an einer Stelle eine Verdickung und an einer andere Stelle dafür eine Querschnittsschwächung ausbildet. Diesem Effekt wirkt ein in Druckrichtung belastbarer Tragstreifen entgegen, dessen Verbindung zu einem geschlossenen Ring ebenfalls so hoch belastbar ist.

Neben anderen Merkmalen ist es eine wesentliche Eigenschaft der erfindungsgemäßen Zementrohrmanschette, dass der pulverförmige Trockenmörtel in den Hohlräumen des Vliesstreifens transportiert und an seinen Bestimmungsort verbracht wird. Dabei halten die Fäden des Vliesstreifens die Elemente des Pulvers zum allergrößten Teil in den gebildeten Hohlräumen zurück. Nur in den Randbereichen ist es nicht auszuschließen, dass sich bei einer Verformung des Vliesstreifens geringe Mengen des Trockenmörtels lösen und nach außen rieseln.

Um das auszuschließen, schlägt die Erfindung vor, dass der Vliesstreifen zusätzlich von einer Folie umgeben ist, die sich im Kontakt mit dem Wasser auflöst, welches zur Hydratisierung und damit zur Fertigstellung der Zementschicht zugeführt wird. Eine derartige Folie kann zwischen dem Vliesstreifen und dem Rohrstutzen und/oder zwischen dem Vliesstreifen und dem Tragstreifen eingelegt werden. Als dafür geeignetes Material schlägt die Erfindung Gelatine und/oder Polyvinylalkohole und/oder Zellulose oder andere wasserlösliche Materialien vor.

Wenn der soeben beschriebene Schutz gegen ein Herausrieseln des Trockenmörtels noch nicht ausreichen sollte, so können auch die Längskanten des Vliesstreifens abgedeckt werden. Dazu ist natürlich auch die soeben genannte wasserlösliche Folie denkbar. Sie wird dann um die gesamten Außenflächen des Vliesstreifens herum zu einer Tasche verschlossen, die sich erst unter dem Einfluss des Wassers wieder auflöst.

In einer anderen Ausführungsvariante besteht die Folienschicht aus zwei Teilen, die zusätzlich auch zum Fixieren des Vliesstreifens dienen, solange der Tragstreifen noch nicht zu einem Ring geschlossen ist. Dazu wird eine erste wasserlösliche Folie als Innenstreifen zwischen Rohrstutzen und Vliesstreifen angeordnet ist und eine zweite wasserlösliche Folie als Außenstreifen zwischen Vliesstreifen und Tragstreifen eingelegt, wobei der Innenstreifen und der Außenstreifen breiter als der Vliesstreifen sind, sodass sie an ihren Rändern aufeinander aufliegen und in diesem Bereich miteinander verbunden sind, z.B. durch Kleben, Nähen oder Klammern. So entsteht eine Umhüllung des Vliesstreifens, die alle Bestandteile des pulverförmigen Trockenmörtels zurückhält.

In einer anderen Ausführungsalternative besteht der Innenstreifen zwischen Rohrstutzen und Vliesstreifen aus dem gleichen Material wie der Tragstreifen. Wenn er quer zu seiner Längsachse relativ flexibel ist, kann er an seinen beiden Kanten mit dem Tragstreifen vernäht oder andersartig verbunden werden. Dadurch wird eine geschlossene Tasche gebildet, die den Vliesstreifen mit dem darin gelagerten Trockenmörtel umhüllt und dessen Herausfallen verhindert.

Auf dem über den Vliesstreifen hinaus überstehenden Rand des Innenstreifens kann zusätzlich ein Klebestreifen aufgeklebt werden, der mit der Oberfläche des Rohrstutzens verklebbar ist und so den Vliesstreifen darauf fixiert, derweil der Tragstreifen zu einem vollständigen Ring verschlossen wird.

Zur Absicherung der Seitenkanten des Vliesstreifens gegen ein Herausrieseln des Mörtelpulvers sind jedoch auch andere Folien, ein Vlies oder textile Gewebe denkbar. Diese Schichten sind sinnvoller Weise erst nach dem Einbringen des pulverförmigen Trockenmörtels in das Vlies aufzubringen.

Für das Vlies schlägt die Erfindung eine Zusammensetzung aus sehr langen und vorwiegend in Längsrichtung orientierten Fäden vor. Da das Vlies wasserfest sein muss, werden dafür Kunststoffe wie Polyethylen und/oder Propylen und/oder Polyamid und/oder Polyester bevorzugt. Denkbar ist es jedoch auch, dass zumindest zusätzlich - eine Verstärkung aus anderen Kunststofffasern oder sogar aus Draht in das Vlies eingebracht wird.

Ein wesentliches Element der Erfindung ist der Tragstreifen, der von zahlreichen Öffnungen durchsetzt ist, und zugleich eine ausreichende mechanische Stabilität aufweisen muss. Als Bauform dafür schlägt die Erfindung vor, dass der Tragstreifen ein Gitter oder ein Netz oder eine Lochplatte oder ein Vlies oder ein Gewebe ist, wobei die Bestandteile zwischen den Öffnungen eine für den jeweiligen Anwendungsfall ausreichende Festigkeit aufweisen müssen.

Ein Netz wird insbesondere für die Anwendung einer erfindungsgemäßen Zementrohrmanschette auf der Außenseite von Rohrstutzen geeignet sein, weil es mit einer sehr hohen Zugfestigkeit und zugleich auch mit einer sehr hohen Flexibilität hergestellt werden kann. Auch ein Vlies oder ein Gewebe wird deshalb eher für die Außenseite als für die Innenseite eines Rohrstutzens geeignet sein, da es für eine Zugbelastbarkeit prädestiniert ist, aber gegenüber Druckkräften in Richtung der Fläche nicht so widerstandsfähig ist.

Bei Gittern oder Lochplatten ist eine ausreichende Widerstandsfähigkeit gegenüber Druck- oder Schubkräften in Richtung der Fläche mit relativ sehr geringem Aufwand zu verwirklichen, weshalb diese Bauformen vor allem für Zementrohrmanschetten zur Anwendung auf der Innenseite von Rohrstutzen geeignet sind.

In allen Fällen können die Tragstreifen sowohl aus Kunststoff als auch aus Metall gefertigt werden. Sinnvoll kann auch ein Verbundwerkstoff aus Kunststoff mit versteifenden Metalleinlagen sein.

Ein weiteres, wesentliches Merkmal der Erfindung ist, dass der Tragstreifen zu einem geschlossenen Ring verbunden ist. Diese Verbindung kann je nach Material und Ausführung des Tragstreifens durch Schweißen, Verhaken, Verschrauben, Verkleben, Verpressen, Verklammern oder Vernähen ausgeführt werden.

Wenn die beiden Enden des Tragstreifens stumpf aneinander stoßen, so können sie durch Verschweißung oder Vernähen oder Verklammern miteinander verbunden werden. Die anderen Verbindungsarten erfordern, dass sich die beiden Enden eines zu einem Ring geschlossenen Tragstreifens überlappen.

Bei derart überlappenden Endbereichen sind verschiedene Arten der Verbindung sinnvoll. Wenn der Tragstreifen z.B. aus Blech oder aus einem sehr steifen Kunststoff gefertigt ist, ist es sinnvoll, dass auf einem der beiden Endbereiche des Tragstreifens wenigstens ein Haken angeordnet ist, der in eine entsprechende Öffnung im anderen Endbereich des Tragstreifens einhakt, einrastet oder eingepresst werden kann. Anstelle eines sofort als Haken erkennbaren Elementes sind auch andere, aus der Fläche herausragende Elemente möglich, die in Richtung der Ebene des Tragstreifens eine Hinterschneidung bilden, sodass sie Schubkräfte in Richtung der Ebene aufnehmen können. Hierfür sind aus dem aktuellem Stand der Technik zahlreiche Varianten bekannt, auf die hier nicht weiter eingegangen werden soll.

Von den vielen bekannten Verbindungen sind jedoch solche zu bevorzugen, die beim Aufquellen des angefeuchteten Trockenmörtels nicht in radialer Richtung aus der Öffnung herausgedrückt werden können.

In einer anderen Verbindungsvariante wird ausgenutzt, dass der Tragstreifen grundsätzlich zahlreiche Öffnungen aufweist. Wenn diese Öffnungen einen genau definierten, harten Rand aufweisen, dann ist es sinnvoll, zwei Öffnungen zur Verbindung zu nutzen. Wenn der Tragstreifen schon zu einem Ring geformt ist und sich die beiden Endbereiche überlappen und sich zwei Öffnungen in den beiden überlappenden Endbereichen überdecken, dann schlägt die Erfindung vor, dass eine Schraube oder ein Niet oder ein anderes Verbindungsmittel durch die beiden Öffnungen hindurch geführt wird und durch Verschrauben, Vernieten oder auf andere Weise die beiden Endbereiche miteinander verbindet.

Eine weitere Variante ist ein Klettverschluss, der auf die Endbereiche des Tragstreifens aufgebracht ist. Auf dem einen Endbereich ist dann das Hakenband des Klettverschlusses und auf dem anderen Bereich das Flauschband angeordnet. Ein Vorteil des Klettverschlusses ist, dass er sich sehr leicht schließen und auch ebenso leicht wieder öffnen lässt, um eine Korrektur der Verbindung vorzunehmen.

Wie bereits mehrfach erwähnt, kann der Tragstreifen zumindest teilweise aus Metalldrähten bestehen. Für die Verbindung der beiden Enden des Tragstreifens zu einem Ring ist es dann sinnvoll, die Enden der Metalldrähte abzuwinkeln, zurückzubiegen und jeweils ineinander zu verhaken.

Wenn der Tragstreifen aus einem textilem Material besteht oder aus einem anderen, flächigen Material, das eindringenden Dornen oder Spitzen nur einen geringen Widerstand entgegen setzt, jedoch an der eindringenden Stelle nicht weiter einreißt, dann ist es sinnvoll diese Endbereiche durch C-förmige Klammern miteinander zu verbinden, die mit Dornen oder Spitzen versehen sind, welche sich in die beiden Endbereiche des Tragstreifens hinein drücken.

Anders als bei den Endbereichen des Tragstreifens, die sich in der Praxis zumeist überlappen, da sie im Verhältnis zu der Dicke des Vliesstreifens recht dünn sind, bevorzugt die Erfindung, dass sich die Endbereiche des Vliesstreifens nicht überlappen, weil dadurch eine unerwünschte Verdickung der Mörtelschicht an dieser Stelle entstehen würde. Stattdessen sollten sich die Endbereiche des Vliesstreifens stumpf einander gegenüberstehen und erst beim Verflüssigen des Trockenmörtels durch den etwas verfließenden Mörtel miteinander verbunden werden.

Es ist für eine besonders belastbare Verbindung wünschenswert, dass dabei auch die Enden der Elemente des Vlies' miteinander verbunden werden. Dies wird in der Praxis jedoch mit einem derart hohen Aufwand verbunden sein, dass in den meisten Fällen wohl darauf verzichtet werden wird. Denkbar ist, dass bei Einlagen in das Vlies aus Metalldrähten deren Enden miteinander verhakt und/oder verdrillt werden. Ansonsten ist es jedoch wünschenswert, dass die Berührungsfläche der beiden Enden des Vliesstreifens möglichst groß ist, damit der von beiden Enden aus heraus fließende Beton sich innig mit den gesamten Vliesstreifen des Endbereiches verbindet. Insbesondere wenn die Vliesstreifen - zumindest in den Endbereichen - gewellt sind, entsteht dadurch eine gewisse zusätzliche Belastbarkeit der Verbindung. Um diese Fläche möglichst groß zu gestalten, empfiehlt die Verbindung, dass die beiden Stirnseiten des Vliesstreifens in einem spitzen Winkel zu den schmalen Längskanten ausgerichtet sind.

Eine verbindungsgemäße Zementrohrmanschette ist mit vergleichsweise sehr wenig Verschmutzung und geringem Arbeitsaufwand anbringbar, was ihr wesentlicher Vorteil gegenüber anderen Prinzipien einer Manschette über die Verbindungsstelle von zwei aneinandergrenzenden Rohrstutzen ist. Deshalb ist eine erfindungsgemäße Zementrohrmanschette auch für eine automatisierte Aufbringung geeignet. Derartige Vorrichtungen sind für die Außenseite einer Rohrverbindung grundsätzlich anders aufgebaut als für die Innenseite einer Rohrverbindung.

Wenn eine erfindungsgemäße Manschette im Inneren einer Rohrverbindung aufgebracht werden soll, so ist dafür entweder eine muffenartige Ausweitung der Rohre an der Verbindungsstelle sinnvoll, welche die Zementrohrmanschette beherbergt ohne die lichte Weite des Rohres zu beeinträchtigen. Eine andere, sinnvolle Anwendung ist eine Betonauskleidung an der Innenfläche, die im Bereich der Naht unterbrochen ist und durch eine erfindungsgemäße Zementrohrmanschette gefüllt und fortgeführt wird.

Insbesondere wenn der Querschnitt des Rohres so klein ist, dass ein Mensch sich darin nicht aufhalten kann, ist eine Vorrichtung unabdingbar. Die Erfindung schlägt dafür ein Gestell vor, dass innerhalb des Rohres in dessen Längsrichtung verfahren werden kann. Dieses Gestell soll an seiner Stirnseite mehrere, radial ausgerichtete lineare Aktoren tragen, an denen eine trockene Zementrohrmanschette lösbar befestigt ist. Geeignete Aktoren sind z.B. Pneumatikzylinder, aber auch rein mechanisch und/oder elektrisch zu aktivierende Antriebselemente.

Damit die Zementrohrmanschette mitsamt dem Gestell in das Rohr eingefahren werden kann, müssen sich ihre beiden Enden überlappen. Wenn das Gestell im Inneren des Rohres soweit verfahren ist, dass die Zementrohrmanschette die Verbindung zweier aneinandergrenzenden Rohrstutzen genau überdeckt, werden die Aktoren nacheinander aktiviert und drücken die Zementrohrmanschette dadurch schrittweise an die Innenwand des Rohrstutzens an. Vorzugsweise wird dadurch eine muffenartige Ausweitung der Rohrverbindung oder eine Lücke in der inneren Betonauskleidung ausgefüllt.

Denkbar, wenn auch nicht unbedingt zu bevorzugen, ist es, dass die Zementrohrmanschette auf eine glatte, durchgehende Fläche im Inneren eine Rohres auf die Verbindungsnaht aufgesetzt wird.

Wenn die Zementrohrmanschette in der korrekten Position angebracht ist, und die beiden Stirnkanten des Vliesstreifens einander ohne Abstand gegenüber stehen, müssen im nächsten Schritt die beiden Enden des Tragstreifens durch eine dafür geeignete Verbindungsvorrichtung miteinander verbunden werden.

Wenn die Verbindung eine Klettverbindung oder eine einhakbare Verbindung ist, kann sie durch einen Greifer mit zwei oder drei Antriebsachsen erstellt werden. Als Antriebe sind zum Beispiel die relativ kostengünstigen Pneumatikzylinder geeignet.

Wenn eine Klebverbindung vorgesehen wird, so müssen an dem Gestell Düsen zum Auftragen des Klebstoffes und eine Andruckvorrichtung zum Aufeinanderpressen der beiden, sich überlappenden Enden des Tragstreifens vorgesehen werden.

Bei einer Schraub- oder Nietverbindung muss eine Vorrichtung zum Zentrieren der Schraubverbindungen und eine Schraub- und/oder Nieteinrichtung vorgesehen werden. Für das Verschweißen muss eine entsprechende Schweißvorrichtung an der Stirnseite des Gestells montiert werden. Sehr interessant ist an dieser Stelle eine Verbindung durch Reibschweißen. Diese Schweißmethode hat den Vorteil, dass nur die tatsächlich miteinander zu verbindenden Flächen erhitzt werden und die Randbereiche nur geringfügig erwärmt werden. Der zum Reibschweißen erforderliche Antrieb kann relativ kompakt gestaltet werden und dadurch in das relativ dicht bestückte stirnseitige Ende des Gestells integriert werden.

Wenn der Tragstreifen aus Metall ist, so ist auch eine elektrische Verschweißung der beiden Kanten denkbar.

Der Vorteil eines Verhakens der beiden Endbereiche ist, dass diese Verbindung unmittelbar danach belastbar ist und davon keine weitere Kontaminierung der Randbereiche ausgeht. Eine Schweißverbindung benötigt eine gewisse Abkühlzeit, die in der Regel jedoch kurz ist. Eine Klebverbindung erfordert zumeist eine etwas längere Aushärtezeit, die den Prozess insgesamt verzögert.

In jedem Fall muss nach dem Herstellen und Aushärten der Verbindung der beiden Enden des Tragstreifens im nächsten Schritt der Trockenmörtel gewässert werden. Dadurch wird aus Düsen, die am Gestell befestigt und in der Regel radial ausgerichtet sind, Wasser durch die Öffnungen des Tragstreifens hindurch in den Vliesstreifen eingespült, sodass der Trockenmörtel in den Zustand eines flexiblen Mörtelringes übergeht. In diesem Zustand wird er durch den zuvor zu einem Ring verschlossenen Tragstreifen stabilisiert. Deshalb kann die Vorrichtung unmittelbar nach dem ausreichenden Bewässern wieder von der Nahtstelle entfernt werden. Dazu müssen die Linearaktoren und erforderlichenfalls die Düsen zur Aufbringung von Wasser und/oder die Einrichtung zum Herstellen der Verbindung des Tragstreifens näher an die Längsachse herangefahren werden, sodass sich die Vorrichtung ohne Kollision mit den Innenwänden des Rohres entfernen lässt.

Wenn eine erfindungsgemäße Zementrohrmanschette auf der Außenseite von zwei Rohrstutzen aufgebracht werden soll, so ist im Prinzip ein ähnliches Verfahren wie das zuvor für die Rohrinnenseite geschilderte denkbar. Zu bevorzugen ist jedoch eine geänderte mechanische Anordnung, die insbesondere bei sehr großen Rohren eine einfachere Montage und einen geringeren Aufwand bei der Erstellung der Vorrichtung erfordert.

Die Erfindung schlägt vor, dass dafür die Zementrohrmanschette zu einer Spule oder zu einem Coil aufgewickelt ist und an einen Abwickler eingehängt ist, der auf einer Schiene um den Umfang der Verbindungsstelle herum verfahren werden kann. Diese Schiene verläuft parallel zur Verbindung der beiden Rohrstutzen auf deren Außenfläche. Zum Aufbringen der Zementrohrmanschette wird der Abwickler auf dieser Schiene einmal um den Umfang der Naht herum verfahren und dabei die Spule oder das Coil mit der Zementrohrmanschette abgewickelt und auf die Naht gedrückt. Das kann entweder durch Andrückvorrichtungen geschehen, die an der Schiene eingreifen oder durch eine selbstklebende Beschichtung der Innenseite des Randbereiches vom Vliesstreifen oder dessen Umhüllung.

Sobald der Vliesstreifen vollständig um die Rohrverbindung herum gelegt ist, müssen die beiden Enden des Tragstreifens miteinander verbunden werden, wofür je nach gewähltem Verbindungsverfahren entsprechende Verbindungseinrichtungen am Abwickler angeordnet werden müssen, die im Prinzip den zuvor für die Rohrinnenseite geschilderten Vorrichtungen gleichen.

Sobald die beiden Enden des Tragstreifens miteinander verbunden sind und die Verbindung gegebenenfalls ausgehärtet ist, kann der Trockenmörtel bewässert werden. Dazu reicht es aus, wenn nur Düsen vorhanden sind, die über die Breite des Tragstreifens hinwegreichen. Diese Düsen können mit dem Abwicklergestell auf der um das Rohr herumführenden Schiene weiter gefahren werden, sodass sequenziell der gesamte Vliesstreifen bewässert wird.

Sobald eine ausreichende Wassermenge eingebracht ist, wird der Trockenmörtel zu einem flexiblen Mörtelring, der vom Tragstreifen in der ursprünglichen Form mit gleicher Schichtdicke an allen Stellen des Umfanges gehalten wird. Deshalb kann der "Abwickler" und die Schiene unmittelbar nach dem Bewässern wieder abgenommen werden.

Im Folgenden sollen weitere Einzelheiten und Merkmale der Erfindung anhand eines Beispiels näher erläutert werden. Dieses soll die Erfindung jedoch nicht einschränken, sondern nur erläutern. Es zeigt in schematischer Darstellung:
- **Figur 1**: zwei verschweißte Rohrstutzen, deren Schweißnaht teilweise mit einer Zementrohrmanschette abgedeckt ist
- **Figur 2**: unteres Ende der Zementrohrmanschette gem. Figur 1

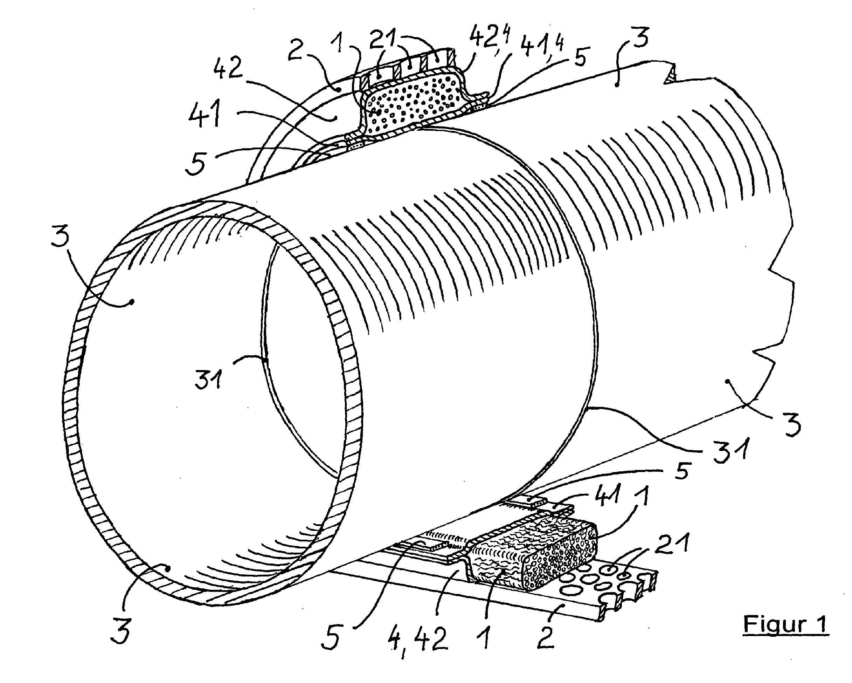

In **Figur 1** sind zwei Rohrstutzen 3 im Schrägbild gezeichnet, die mit einer Schweißnaht 31 miteinander verschweißt sind. Die beiden Rohrstutzen 3 können sowohl Teile eines langen Rohres sein, als auch eine Verbindung zu andern Hohlkörper, wie z.B. einem Tank, einem Ventil oder einem anderen Behälter sein.

Um die Hälfte der gezeigten Schweißnaht 31 ist auf deren Außenseite bereits eine erfindungsgemäße Zementrohrmanschette angelegt. Die beiden Enden dieser Zementrohrmanschette sind zeichnerisch aufgeschnitten, um den inneren Aufbau zu zeigen. Das oben gezeigte Ende ist zeichnerisch senkrecht zur Längsachse geschnitten. In der Schnittebene ist in der Mitte der Vliesstreifen 1 zu sehen, auf dessen Schnittfläche die quer geschnittenen Fasern des Vlies als Kreise eingetragen sind, zwischen denen sich der pulverförmige Zement und die ebenfalls pulverförmigen Zuschlagstoffe befinden.

In der Schnittfläche ist in Figur 1 gut zu erkennen, dass der Vliesstreifen 1 allseits von einer Folie 4 umgeben ist. Diese Folie besteht aus dem Innenstreifen 41 und dem Außenstreifen 42. Die Randbereiche beider Streifen sind seitlich neben dem Vliesstreifen 1 miteinander flächig verbunden, z.B. durch Verkleben, Vernähen oder Verklammern. Dadurch bilden sie einen Schlauch, der den Vliesstreifen 1 vollständig umschließt.

In Figur 1 wird als eine weitere Ausführungsvariante deutlich, dass auf die seitlich stegartig überstehenden Bereiche des Innenstreifens 41 ein weiterer Streifen - der Klebestreifen 5 - aufgetragen ist. Es ist ein beidseits klebender Film, der den Vliesstreifen 1 und die umhüllende Folie 4 in ihrer Position hält, derweil der Tragstreifen 2 noch nicht zu einem vollständigen Ring verschlossen ist.

In Figur 1 ist ebenfalls gut zu erkennen, dass um den Vliesstreifen 1 und dessen umhüllende Folie 4 herum der Tragstreifen 2 geführt ist. Im Schnitt ist zu erkennen, dass der Tragstreifen 2 die Öffnungen 21 aufweist, die einen unmittelbaren Zugang zu der Folie 4 ermöglichen.

Im unteren Teil der Figur 1 ist das andere Ende der Zementrohrmanschette an verschiedenen Stellen entlang seiner Längsachse geschnitten, sodass die Elemente zu einem Teil aus dem Verbund herausragen. Ganz unten befindet sich der Tragstreifen 2. Sehr gut zu erkennen ist, dass er von den Öffnungen 21 durchlöchert ist. Auf dem Tragstreifen 2 liegt der Vliesstreifen 1 nicht direkt auf, sondern nur über den dazwischen liegenden Außenstreifen 42, der in seinen Randbereichen mit dem Innenstreifen 41 aus der gleichen Folie verbunden ist. Auf den Randstreifen des Innenstreifens 41 ist jeweils ein Klebestreifen 5 aufgebracht, der den Vliesstreifen 2 an dem Rohrstutzen 3 fixiert.

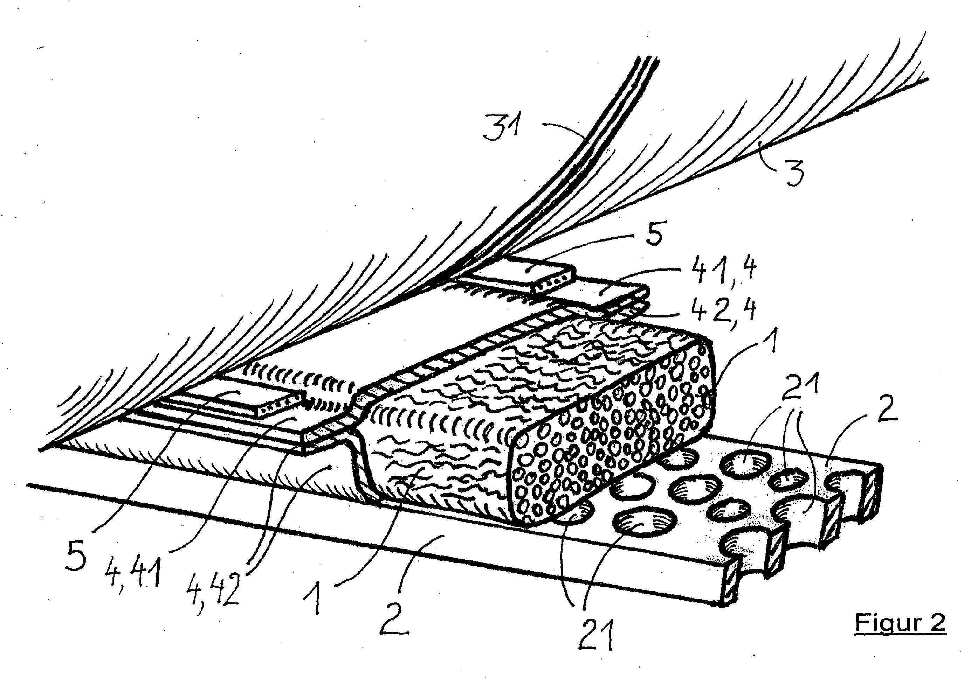

Zur besseren Erkennbarkeit ist dieser Bereich nochmals vergrößert dargestellt in
**Figur 2****:** Wo zu erkennen ist, dass die Zementrohrmanschette im noch nicht aufgebrachten Zustand entlang ihrer Längsachse gerade verläuft und darauf wartet, ebenfalls um die Schweißnaht 31 zwischen den beiden Rohrstutzen 3 herum gewölbt zu werden.

In Figur 2 ist gut nachvollziehbar, dass dazu der Tragstreifen 2 an seinem freien Ende angehoben werden muss, sodass sich auch der darauf lagernde, flexible Vliesstreifen 1 mit anhebt, bis er auf der Außenfläche des Rohrstutzens 3 aufliegt.

In Figur 2 wird deutlich, dass der Vliesstreifen 1 an seiner Außenfläche von der Folie 4 umgeben ist, die hier aus dem Innenstreifen 41 zwischen dem Vlies 1 und dem Rohrstutzen 3 und dem Außenstreifen 42 zwischen dem Vliesstreifen 1 und dem Tragstreifen 2 zusammengesetzt ist.

Auf den Verbindungsstreifen des Innenstreifens 41 mit dem Außenstreifen 42 ist in dieser Ausführungsvariante eine selbstklebende Schicht angebracht, der Klebstreifen 5, der von beiden Seiten klebt. Wenn der Vliesstreifen 1 mitsamt seiner umhüllenden Folie 4 an den Rohrstutzen 3 angedrückt wird, dann wird dabei auch der Klebestreifen 5 an den Rohrstutzen 3 angedrückt und verklebt sich dadurch. Auf diese Weise wird der Vliesstreifen 1 schon vor dem Verbinden des Tragstreifens 2 zu einem belastbaren Ring gesichert.

In Figur 2 ist ersichtlich, dass eine Verbindung von den Öffnungen 21 im Tragstreifen 2 zur Bewässerung des Mörtels in den Hohlräumen des Vliesstreifens 1 nur dann möglich ist, wenn die Folie 4, hier insbesondere der Außenstreifen 42 nicht mehr da ist. Ebenso muss für eine gute Haftung des Mörtels im Vliesstreifen 1 auch der Innenstreifen 41 der Folie 4 entfernt werden. In Figur 2 ist gut nachvollziehbar, dass eine wasserlösliche Folie durch laufende Zufuhr von Wasser aufgelöst und weggeschwemmt wird.

Da diese Auflösung erst dann erfolgt, wenn der Tragstreifen 2 bereits vollständig um die Zementrohrmanschette herum geschlossen ist und sie dadurch trägt, bedeutet das Entfallen der Folie 4 keinen nennenswerten Verlust für den Rückhalt des Mörtels im Vliesstreifen 1.

Der Übersichtlichkeit halber ist weder in Figur 1 noch in Figur 2 eine der zahlreichen genannten Möglichkeiten für das Schließen des Tragstreifens 2 zu einem Ring wiedergegeben.

### Bezugszeichenliste

- 1: Vliesstreifen, enthält Trockenmörtel
- 2: Tragstreifen, liegt auf Vliesstreifen 1 auf
- 21: Öffnungen im Tragstreifen 2
- 3: Rohrstutzen, an ihrer Verbindungsstelle vom Vliesstreifen 1 bedeckt
- 31: Schweißnaht zur Verbindung der beiden Rohrstutzen 3
- 4: Folie, wasserlöslich, auf Vliesstreifen 1 aufliegend
- 41: Innenstreifen der Folie 4
- 42: Außenstreifen der Folie 4
- 5: Klebestreifen

## Patentansprüche

1. Zementrohrmanschette zur Korrosionshemmenden Abdeckung der Verbindung von aneinandergrenzenden Rohrstutzen (3), bestehend aus
- einem vor dem Erhärten flexiblen Mörtelring und
- einem darauf flächig aufliegenden und zu einem Ring verbundenen Tragstreifen (2),
- der zahlreiche Öffnungen (21) aufweist,
- aus wasserfestem Material besteht, und
- in tangentialer Richtung mit höheren Kräften belastbar ist als in anderen Richtungen,
**dadurch gekennzeichnet, dass**
der Mörtel in trockenem Zustand als ein pulverförmiges Gemisch aus Zement und Zuschlagstoffen in die Hohlräume eines Vliesstreifens (1) eingebracht ist,
- der auf dem Tragstreifen (2) aufliegt und
- der durch die Öffnungen des Tragstreifens (2) hindurch bewässerbar ist.

2. Zementrohrmanschette nach Anspruch 1, **dadurch gekennzeichnet, dass** der Tragstreifen (2)
- um eine parallel zu seiner kurzen Stirnseite verlaufende Achse mit relativ geringem Kraftaufwand biegbar ist und
- um anders ausgerichtete Achsen nur mit relativ hohen Kräften biegbar ist.

3. Zementrohrmanschette nach einem der vorhergehenden Ansprüche, **dadurch gekennzeichnet, dass** der Vliesstreifen (1) auf der Außenseite der Rohrstutzen (3) aufliegt und der Tragstreifen (2) relativ hohen Zugkräften standhalten kann.

4. Zementrohrmanschette nach einem der vorhergehenden Ansprüche, **dadurch gekennzeichnet, dass** der Vliesstreifen (1) auf der Innenseite der Rohrstutzen (3) aufliegt und der Tragstreifen (2) relativ hohen Druckkräften standhalten kann

5. Zementrohrmanschette nach einem der vorhergehenden Ansprüche, **dadurch gekennzeichnet, dass** sich
- zwischen Vliesstreifen (1) und Rohrstutzen (3) und/oder
- zwischen Vliesstreifen (1) und Tragstreifen (2) eine Folie (4) aus
- Gelatine und/oder
- Polyvinylakoholen und/oder
- Zellulose und/oder
einem anderen, wasserlöslichen Material befindet

6. Zementrohrmanschette nach einem der vorhergehenden Ansprüche, **dadurch gekennzeichnet, dass** wenigstens eine Längskanten des Vliesstreifens (1)
- mit einer wasserlöslichen Folie (4) oder
- mit einer anderen Folie oder
- mit einem Vlies oder
- mit einem textilen Gewebe
abgedeckt ist.

7. Zementrohrmanschette nach einem der vorhergehenden Ansprüche, **dadurch gekennzeichnet, dass** sich eine erste wasserlösliche Folie (4) als Innenstreifen (41) zwischen Rohrstutzen (3) und Vliesstreifen (1) angeordnet ist und eine zweite wasserlösliche Folie (4) sich als Außenstreifen (42) zwischen Vliesstreifen (1) und Tragstreifen (2) befindet und Innenstreifen (41) und Außenstreifen (42) an ihren Rändern aufeinander aufliegen und miteinander verbunden sind, z.B. durch Kleben, Nähen oder Klammern und den Vliesstreifen (1) umhüllen.

8. Zementrohrmanschette nach Anspruch 7,
**dadurch gekennzeichnet, dass** der Innenstreifen (41) zwischen Rohrstutzen (3) und Vliesstreifen (1) aus dem gleichen Material wie der Tragstreifen (2) besteht und mit diesem an seinen beiden Kanten vernäht oder andersartig verbunden sein kann.

9. Zementrohrmanschette nach Anspruch 7 oder 8, **dadurch gekennzeichnet, dass** auf dem Rand des Innenstreifens (41) ein Klebestreifen (5) aufgeklebt ist, der mit der Oberfläche des Rohrstutzens (3) verklebbar ist.

10. Zementrohrmanschette nach einem der vorhergehenden Ansprüche, **dadurch gekennzeichnet, dass** der Vliesstreifen (1) aus
- Polyethylen und/oder
- Propylen und/oder
- Polyamid und /oder
- Polyester
besteht.

11. Zementrohrmanschette nach einem der vorhergehenden Ansprüche, **dadurch gekennzeichnet, dass** der Tragstreifen (2)
- ein Gitter oder
- ein Netz oder
- eine Lochplatte oder
- ein Vlies oder
- ein Gewebe
ist.

12. Zementrohrmanschette nach einem der vorhergehenden Ansprüche, **dadurch gekennzeichnet, dass** der Tragstreifen (2) zu einem geschlossenen Ring
- verschweißt oder
- verhakt oder
- verschraubt oder
- verklebt oder
- verpresst oder
- vernäht
ist.

13. Zementrohrmanschette nach einem der vorhergehenden Ansprüche, **dadurch gekennzeichnet, dass** sich die beiden Enden des zu einem Ring geschlossenen Tragstreifens (2) überlappen.

14. Zementrohrmanschette nach Anspruch 13, **dadurch gekennzeichnet, dass** auf einem der beiden Endbereiche des Tragstreifens (2) wenigstens ein Haken, oder ein anderes, aus der Fläche herausragendes Element angeordnet ist, das in eine Öffnung im anderen Endbereich des Tragstreifens (2) einhakbar, einrastbar oder einpressbar ist.

15. Zementrohrmanschette nach Anspruch 13, **dadurch gekennzeichnet, dass**
- sich wenigstens je eine Öffnung (21) in einem der beiden überlappenden Endbereiche des Tragstreifen (2) mit einer anderen Öffnung (21) im anderen Endbereich überdeckt und
- eine Schraube oder ein Niet oder ein anderes Verbindungsmittel durch die beiden Öffnungen (21) hindurchgeführt ist und die beiden Endbereiche miteinander verbindet.

16. Zementrohrmanschette nach Anspruch 13, **dadurch gekennzeichnet, dass** auf dem einem Endbereich des Tragstreifens (2) ein Hakenband eines Klettverschlusses und auf dem anderen Endbereich ein Flauschband des Klettverschlusses befestigt und mit seinem Gegenstück verhakt ist.

17. Zementrohrmanschette nach Anspruch 13, **dadurch gekennzeichnet, dass** der Tragstreifen (2) wenigstens teilweise aus Metalldrähten besteht, deren Enden abgewinkelt, zurückgebogen und ineinander verhakt sind.

18. Zementrohrmanschette nach Anspruch 13, **dadurch gekennzeichnet, dass** die beiden Endbereiche des Tragstreifens (2) durch C-förmige Klammern miteinander verbunden sind, die mit Dornen oder Spitzen versehen sind, die in das Material des Tragstreifens (2) eindrückbar sind.

19. Zementrohrmanschette nach einem der vorhergehenden Ansprüche, **dadurch gekennzeichnet, dass** die beiden Stirnseiten des Vliesstreifens (1) in einem spitzen Winkel zu den schmalen Längskanten ausgerichtet sind.

20. Vorrichtung zum Aufbringen einer Zementrohrmanschette nach einem der vorhergehenden Ansprüche auf die Innenseite zweier, aneinandergrenzender Rohrstutzen (3), wobei
- ein zylindrisches Gestell an seiner Stirnseite mehrere, radial ausgerichtete, lineare Aktoren trägt,
- das Gestell im Rohrinneren verfahrbar ist, und
- die Linearaktoren näher an die Längsachse des Gestells heran bewegbar sind und dadurch das Gestell aus dem Rohrstutzen (3) herausfahrbar ist,
**dadurch gekennzeichnet, dass**
- an den Aktoren eine trockene Zementrohrmanschette lösbar befestigt ist, wobei
- sich die beiden Enden des Vliesstreifens (1) überlappen und
- das Gestell im Rohrinneren soweit verfahrbar ist, dass die Zementrohrmanschette die Verbindung zweier aneinandergrenzender Rohrstutzen überdeckt und
- die Aktoren nacheinander die Zementrohrmanschette an die Innenwand der Rohrstutzen (3) drücken und
- durch eine Verbindungsvorrichtung am Gestell die beiden Enden des Tragstreifens (2) miteinander verbindbar sind und
- aus Düsen, die am Gestell befestigt und radial ausgerichtet sind, Wasser durch die Öffnungen (21) des Tragstreifens (2) in den Vliesstreifen (1) einspülbar ist und
- erforderlichen falls die Düsen näher an die Längsachse des Gestells heran bewegbar sind und dadurch das Gestell aus dem Rohrstutzen (3) herausfahrbar ist.

21. Vorrichtung zum Aufbringen einer Zementrohrmanschette nach einem der Ansprüche 1-19 auf die Außenseite zweier aneinandergrenzender Rohrstutzen (3), wobei
- die Zementrohrmanschette zu einer Spule oder einem Coil aufgewickelt ist, die/das an einem Abwickler eingehängt ist,
- der auf einer Schiene verfahrbar ist, die parallel zur Verbindung der beiden Rohrstutzen (3) außen um die Rohrstutzen (3) herumgelegt ist,
- die Zementrohrmanschette synchron zum Verfahren des Abwicklers auf der Schiene auf die Verbindung der beiden Rohrstutzen andrückbar ist, und
- dann der Abwickler und die Schienen von dem Rohrstutzen (3) abnehmbar sind,
**dadurch gekennzeichnet, dass**
- nach vollständigem Andrücken der Zementrohrmanschette die beiden sich überlappenden Enden des Tragstreifens (2) von einer Verbindungsvorrichtung miteinander verbindbar sind und
- aus wenigstens einer Düse, die am Abwickler befestigt und radial auf die beiden Rohrstutzen (3) ausgerichtet ist, Wasser durch die Öffnungen (21) des Tragstreifens (2) in den Vliesstreifen (1) einspülbar ist, während der Abwickler auf den Schienen um die Rohrstutzen herum bewegbar ist.

## Claims

1. Cement pipe sleeve for anti-corrosive covering of the connection between adjacent pipe sockets (3), comprising
- a mortar ring that is flexible before hardening, and
- a bearing strip (2), which lies in area contact thereon and is connected to form a ring, and which
- comprises a multiplicity of openings (21),
- consists of water-resistant material, and
- can be loaded with relatively high forces in the tangential direction than in other directions,
**characterised in that**
the mortar, in the dry state, is introduced as a powdery mixture of cement and aggregates into the hollow spaces of a nonwoven strip (1),
- which lies on the bearing strip (2), and
- which can be watered through the openings in the bearing strip (2).

2. Cement pipe sleeve according to claim 1, **characterised in that** the bearing strip (2)
- can be bent with relatively low force application about an axis that runs parallel to its short end face, and
- about axes that have a different orientation, can be bent only with relatively high forces.

3. Cement pipe sleeve according to one of the preceding claims, **characterised in that** the nonwoven strip (1) lies on the outer side of the pipe socket (3) and the bearing strip (2) can withstand relatively high tensile forces.

4. Cement pipe sleeve according to one of the preceding claims, **characterised in that** the nonwoven strip (1) lies on the inner side of the pipe socket (3) and the bearing strip (2) can withstand relatively high compressive forces.

5. Cement pipe sleeve according to one of the preceding claims, **characterised in that**
- between the nonwoven strip (1) and pipe socket (3) and/or
- between the nonwoven strip (1) and bearing strip (2), there is disposed a film (4) of
- gelatine and /or
- of polyvinyl alcohols and/or
- of cellulose and /or
another water-soluble material.

6. Cement pipe sleeve according to one of the preceding claims, **characterised in that** at least one longitudinal edge of the nonwoven strip (1) is covered
- with a water-soluble film (4) or
- with another film or
- with a nonwoven fabric or
- with a textile fabric.

7. Cement pipe sleeve according to one of the preceding claims, **characterised in that** a first water-soluble film (4) is disposed as an inner strip (41) between the pipe socket (3) and nonwoven strip (1) and a second water-soluble film (4) is located as an outer strip (42) between the nonwoven strip (1) and bearing strip (2), and the inner strip (41) and outer strip (42) lie one on top of the other at their edges and are connected to one another, for example by adhesive bonding, stitching or clamps, and envelop the nonwoven strip (1).

8. Cement pipe sleeve according to claim 7, **characterized in that** the inner strip (41) between the pipe socket (3) and nonwoven strip (1) consists of the same material as the bearing strip (2) and can be stitched or otherwise connected to the latter at its two edges.

9. Cement pipe sleeve according to claim 7 or 8, **characterized in that** on the edge of the inner strip (41) an adhesive strip (5) is bonded, which can be adhesively bonded to the surface of the pipe socket (3).

10. Cement pipe sleeve according to one of the preceding claims, **characterized in that** the nonwoven strip (1) consists of
- polyethylene and/or
- propylene and/or
- polyamide and/or
- polyester.

11. Cement pipe sleeve according to one of the preceding claims,
**characterized in that** the bearing strip (1) is
- a mesh or
- a net or
- a perforated plate or
- a nonwoven fabric or
- a woven fabric.

12. Cement pipe sleeve according to one of the preceding claims,
**characterized in that** the bearing strip (2) is
- welded or
- Interlocked or
- screwed or
- adhesively bonded or
- pressed or
- stitched
to form a closed ring

13. Cement pipe sleeve according to one of the preceding claims, **characterized in that** the two ends of the bearing strip (2), which are closed to form a ring, overlap one another.

14. Cement pipe sleeve according to claim 13, **characterized in that** on one of the two end regions of the bearing strip (2) there is disposed at least one hook or another element that projects out of the surface, which can be hooked, snapped or pressed into an opening in the other end region of the bearing strip (2).

15. Cement pipe sleeve according to claim 13, **characterized in that**
- at least one opening (21), in one of the two overlapping end regions of the bearing strip (2), is covered with another opening (21) in the other end region and
- a screw or a rivet or another connecting means is guided through the two openings (21) and connects the two end regions to one another.

16. Cement pipe sleeve according to claim 13, **characterized in that** a hook strip of a hook-and-loop fastener is fastened on one end region of the bearing strip (2) and a fleece strip of the hook-and-loop fastening is fastened on the other end region and is interlocked with its counterpart.

17. Cement pipe sleeve according to claim 13, **characterized in that** the bearing strip (2) consists at least partly of metal wires, of which the ends are angled, bent back and interlocked with one another.

18. Cement pipe sleeve according to claim 13, **characterized in that** the two end regions of the bearing strip (2) are connected to one another by means of C-shaped clamps, which are provided with spikes 1 or points, which can be pressed into the material of the bearing strip (2).

19. Cement pipe sleeve according to one of the preceding claims, **characterized in that** the two end faces of the nonwoven strip (1) are oriented at an acute angle to the narrow longitudinal edges.

20. Device for applying a cement pipe sleeve according to one of the preceding claims onto the inner side of two contiguous pipe sockets (3), wherein
- a cylindrical frame carries, on its end face, a plurality of radially aligned linear actuators,
- the frame is traversable in the pipe interior, and
- the linear actuators can be moved closer to the longitudinal axis of the frame and thereby the frame can be traversed out of the pipe socket (3).
**characterised in that**
- a dry cement pipe sleeve is detachably fastened on the actuators, wherein
- the two ends of the nonwoven strip (1) overlap and
- the frame can be moved in the pipe interior to such an extent that the cement pipe sleeve covers the connection between two contiguous pipe sockets, and
- the actuators in succession press the cement pipe sleeve against the interior wall of the pipe socket (3) and
- by means of a connecting device on the frame, the two ends of the bearing strip (2) can be connected to one another and
- water, from nozzles that are fastened on the frame and oriented radially, can be flushed through the openings (21) of the bearing strip (2) into the nonwoven strip (1) and
- If necessary, the nozzles can be moved closed to the longitudinal axis of the frame, and the frame can thereby be traversed out of the pipe socket (3).

21. Device for applying a cement pipe sleeve according to one of the preceding claims 1 to 19 onto the inner side of two contiguous pipe sockets (3), wherein
- the cement pipe sleeve is wound to form a coil or a winding, which is suspended on an unwinder,
- which can be traversed on a rail, which is laid externally around the pipe socket (3) parallel to the connection of the two pipe sockets (3),
- the cement pipe sleeve can be pressed onto the connection of the two pipe sockets, synchronously with the traversing of the unwinder on the rail, and
- then the unwinder and the rails can be taken off the pipe socket (3), **characterised in that**
- after complete pressing on of the cement pipe sleeve, the two overlapping ends of the bearing strip (2) can be bonded to one another by means of a connecting device, and
- from at least one nozzle, which is fastened on the unwinder and oriented radially onto the two pipe sockets (3), water can be flushed through the openings (21) of the bearing strip (2) into the nonwoven strip (1), while the unwinder can be moved around the pipe socket on the rails.

## Revendications

1. Manchette de tuyau en ciment destinée à recouvrir, à titre de prévention de la corrosion, des tubulures contiguës (3), consistant en
• un anneau en mortier souple avant le durcissement et
• une bande porteuse (2) reposant sur une large surface et reliée de façon à former un anneau,
- qui présente de nombreuses ouvertures (21),
- consiste en matériau résistant à l'eau, et
- qui peut être chargée, dans le sens tangentiel, avec des forces plus importantes que dans d'autres sens,
**caractérisée par le fait**
**que** le mortier est injecté, à l'état sec, sous la forme d'un mélange poudreux de ciment et d'additifs, dans les cavités d'une bande de non-tissé (1),
• qui repose sur la bande porteuse (2) et
• qui peut être ainsi humidifié à travers les ouvertures de la bande porteuse (2).

2. Manchette de tuyau en ciment selon la revendication 1, **caractérisée par le fait que** la bande porteuse (2)
• peut être pliée autour d'un axe orienté parallèlement à sa face frontale courte avec un déploiement de force relativement faible et
• peut être pliée autour d'axes orientés différemment, mais seulement avec un déploiement de forces relativement élevées.

3. Manchette de tuyau en ciment selon une des revendications précédentes, **caractérisée par le fait que** la bande de non-tissé (1) repose sur la face extérieure des tubulures (3), la bande porteuse (2) pouvant résister à des forces de traction relativement grandes.

4. Manchette de tuyau en ciment selon une des revendications précédentes, **caractérisée par le fait que** la bande de non-tissé (1) repose sur la face intérieure des tubulures (3) et que la bande porteuse (2) peut supporter des forces de pression relativement élevées.

5. Manchette de tuyau en ciment selon une des revendications précédentes, **caractérisée par le fait**
• **qu'**entre la bande de non-tissé (1) et la tubulure (3) et/ou
• **qu'**entre la bande de non-tissé (1) et la bande porteuse (2) se trouve une feuille (4)
• en gélatine et/ou
• en alcools de polyvinyle et/ou
• en cellulose et/ou
en un autre matériau soluble dans l'eau.

6. Manchette de tuyau en ciment selon une des revendications précédentes, **caractérisée par le fait qu'**au moins un bord longitudinal de la bande de non-tissé (1) est recouvert
• d'un film (4) soluble dans l'eau ou
• d'un autre film ou
• d'un non-tissé ou
• d'un tissu textile.

7. Manchette de tuyau en ciment selon une des revendications précédentes, **caractérisée par le fait qu'**un premier film (4) soluble dans l'eau est disposé en tant que bande intérieure (41) entre la tubulure (3) et la bande de non-tissé (1), et qu'un second film (4) soluble dans l'eau se trouve en tant que bande extérieure (42) entre la bande de non-tissé (1) et la bande porteuse (2), et que la bande intérieure (41) et la bande extérieure (42) reposent l'une sur l'autre sur leurs bords et sont reliées entre elles, par exemple par collage, couture ou agrafage, et entourent la bande de non-tissé.

8. Manchette de tuyau en ciment selon la revendication 7, **caractérisée par le fait que** la bande intérieure (41) entre la tubulure (3) et la bande de non-tissé (1) consiste en le même matériau que la bande porteuse (2), et peut être cousue ou reliée de toute autre manière avec cette dernière sur ses deux bords.

9. Manchette de tuyau en ciment selon la revendication 7 ou 8, **caractérisée par le fait qu'**une bande adhésive (5) est collée sur le bord de la bande intérieure (41), qui peut être collée avec la surface de la tubulure (3).

10. Manchette de tuyau en ciment selon une des revendications précédentes, **caractérisée par le fait que** la bande en non-tissé (1) consiste
• en polyéthylène et/ou
• en propylène et/ou
• en polyamide et/ou
• en polyester.

11. Manchette de tuyau en ciment selon une des revendications précédentes, **caractérisée par le fait que** la bande porteuse (2) est
• une grille ou
• un filet ou
• une plaque perforée ou
• un non-tissé ou
• un tissu.

12. Manchette de tuyau en ciment selon une des revendications précédentes, **caractérisée par le fait que** la bande porteuse (2) est
• soudée ou
• accrochée ou
• vissée ou
• collée ou
• pressée ou
• cousue.

13. Manchette de tuyau en ciment selon une des revendications précédentes, **caractérisée par le fait que** les deux extrémités de la bande porteuse (2) se refermant de manière à former un anneau se chevauchent.

14. Manchette de tuyau en ciment selon la revendication 13, **caractérisée par le fait que**, sur une des deux zones finales de la bande porteuse (2) est disposé au moins un crochet, ou tout autre élément dépassant de la surface, qui peut être accroché, encranté ou pressé dans une ouverture dans l'autre zone finale de la bande porteuse (2).

15. Manchette de tuyau en ciment selon la revendication 13, **caractérisée par le fait**
• **qu'**au moins une ouverture (21), dans une des deux zones finales se chevauchant de la bande porteuse (2), se recouvre à chaque fois avec une autre ouverture (21) dans l'autre zone finale et
• **qu'**une vis ou un rivet ou un autre moyen de connexion est mené à travers les deux ouvertures (21) en reliant les deux zones.

16. Manchette de tuyau en ciment selon la revendication 13, **caractérisée par le fait que** la bande de crochet d'une fermeture zippée est fixée sur une zone finale de la bande porteuse (2), et une bande velcro de la bande zippée est fixée sur l'autre zone finale, et est accrochée à sa contre-pièce.

17. Manchette de tuyau en ciment selon la revendication 13, **caractérisée par le fait que** la bande porteuse (2) consiste au moins en partie en fils métalliques dont les extrémités sont enroulées, recourbées en arrière et accrochées les uns dans les autres.

18. Manchette de tuyau en ciment selon la revendication 13, **caractérisée par le fait que** les deux zones finales de la bande porteuse (2) sont reliées l'une à l'autre par des fixations en forme de C qui sont pourvues d'ergots ou de pointes pouvant être pressés dans le matériau de la bande porteuse (2).

19. Manchette de tuyau en ciment selon une des revendications précédentes, **caractérisée par le fait que** les deux faces frontales de la bande de non-tissé (1) sont orientées dans un angle aigu par rapport aux bords longitudinaux minces.

20. Dispositif destiné à poser une manchette de tuyau en ciment selon une des revendications précédentes sur la face intérieure de deux tubulures contiguës (3) sachant
• qu'un cadre cylindrique porte sur sa face frontale plusieurs actionneurs linéaires orientés dans le sens radial,
• que le cadre peut être déplacé à l'intérieur du tuyau, et
• que les actionneurs linéaires peuvent être approchés de l'axe longitudinal du cadre en faisant ainsi sortir le cadre des tubulures (3)
**caractérisée par le fait**
• **qu'**une manchette de tuyau en ciment sèche peut être fixée de façon détachable, sachant que
• les deux extrémités de la bande de non-tissé (1) se chevauchent,
• le cadre à l'intérieur du tuyau peut être déplacé jusqu'à ce que la manchette de tuyau en ciment recouvre la liaison de deux tubulures contiguës,
• les actionneurs pressent l'un après l'autre la manchette du tuyau en ciment sur la paroi intérieure des tubulures (3),
• les deux extrémités de la bande porteuse (2) peuvent être reliées entre elles par un dispositif de liaison sur le cadre, et
• **que** de l'eau peut être injectée dans les bandes de non-tissé (1), à partir de buses qui sont fixées sur le cadre et sont orientées dans le sens radial, à travers les ouvertures (21) de la bande porteuse (2).
• les buses peuvent être, le cas échéant, approchées de l'axe longitudinal, le cadre pouvant ainsi être sorti des tubulures (3).

21. Dispositif destiné à poser une manchette de tuyau en ciment selon une des revendications précédentes 1 à 19 sur la face extérieure de deux tubulures (3) contiguës, sachant que
• la manchette de tuyau en ciment est embobinée sur une bobine ou un coil qui est accroché à un enrouleur,
• lequel peut être déplacé sur un rail qui est posé parallèlement à la connexion des deux tubulures (3), à l'extérieur et autour des tubulures (3),
• la manchette de tuyau en ciment pouvant être pressée, en synchronisation avec le procédé de l'enrouleur, sur le rail sur la connexion des deux tubulures,
• l'enrouleur et les rails pouvant alors être retirés de la tubulure (3) **caractérisée par le fait**
• **que** les deux extrémités de la bande porteuse (2) se chevauchant peuvent être reliées l'une à l'autre par un dispositif de connexion après que la manchette de tuyau en ciment a été entièrement pressée,
• de l'eau pouvant être injectée, à partir d'au moins une buse fixée sur l'enrouleur et orientée dans le sens radial sur les deux tubulures (3), à travers les ouvertures (21) de la bande porteuse (2) dans la bande de non-tissé (1), tandis que l'enrouleur peut être déplacé sur les rails, autour des tubulures.
